# EUROPÄISCHE PATENTSCHRIFT

(11) **EP 3 206 976 B1**
(45) Veröffentlichungstag und Bekanntmachung des Hinweises auf die Patenterteilung: **10.01.2018**
(21) Anmeldenummer: 15801145.2
(22) Anmeldetag: 24.11.2015
(51) Int. Cl.: B65G 54/02, B65G 47/96

(54) **XY-TISCH FÜR EIN LINEARES TRANSPORTSYSTEM**
XY TABLE FOR A LINEAR TRANSPORT SYSTEM
TABLE XY POUR SYSTÈME DE TRANSPORT LINÉAIRE

(30) Priorität: 24.11.2014 DE 102014117150
(43) Veröffentlichungstag der Anmeldung: 23.08.2017
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2015/077535
(87) Internationale Veröffentlichungsnummer: WO 2016/083394

(56) Entgegenhaltungen:
- KR-A- 20030 013 868
- KR-A- 20100 117 316
- US-A1- 2009 107 806

## Beschreibung

Die Erfindung betrifft ein lineares Transportsystem mit einem XY-Tisch.

Als Transportsysteme in der Produktion und Fertigung werden zunehmend lineare Antriebskonzepte eingesetzt, bei denen auf einem Verfahrweg mehrere Transportschlitten unabhängig voneinander gesteuert und bewegt werden können, wodurch sich eine hohe Flexibilität beim Produktfluss, z. B. um Produktgruppierungen vorzunehmen oder unterschiedliche Prozesszeiten zu berücksichtigen, erreichen lässt. Bei der Auslegung von linearen Antriebssystemen hat sich dabei als vorteilhaft erwiesen, den Verfahrweg aus bestrombaren Magnetfelderzeugern zu bilden, wohingegen die Schlitten passiv kabellos fahren.

Ein solches lineares Antriebssystem ist in der DE 10 2012 204 919 A1 beschrieben. Bei diesem linearen Transportsystem ist eine Reihe von Magnetspulen entlang des Verfahrweges angeordnet, wobei die auf dem Verfahrweg angeordneten Schlitten mit Permanentmagneten versehen sind. Über eine dynamische Ansteuerung der einzelnen Spulen entlang des Verfahrwegs wird für jeden Schlitten ein eigenes drehstromäquivalentes Wanderfeld erzeugt, das den Schlitten unabhängig von den weiteren Schlitten bewegt. Der Verfahrweg mit den einzelnen Spulen ist dabei in Modulbauweise aufgebaut, kann auch als geschlossene Bahn ausgeführt werden, um einen umlaufenden Transport zu ermöglichen.

Bei linearen Transportsystemen ist jedoch nur die Bewegung in eine Richtung entlang des Verfahrwegs möglich. In einem Produktions- und Fertigungsprozess ist jedoch beim Transport eines zu verarbeitenden Werkstücks oft eine zweidimensionale Bewegung, insbesondere im Bereich der Bearbeitungsstation erforderlich. Die erforderliche Bewegung in die zweite Richtung wird dann in der Regel durch die Bearbeitungsstation selbst oder einem der Bearbeitungsstation zugeordneten Roboter oder anderem Aktuator ausgeführt.
Um eine zweidimensionale Bewegung durchführen zu können, besteht auch die Möglichkeit, einen Schlitten in einem Transportsystem als XY-Tisch, auch Kreuztisch oder Kreuz-Support genannt, auszulegen. XY-Tische sind Zweiachsensysteme, bestehend aus zwei einachsigen linearen Führungssystemen, die eine Bewegung eines Objekts in zwei Richtungen innerhalb einer Ebene ermöglichen. Der XY-Tisch trägt das zu bearbeitende Werkstück und kann durch das Zusammenspiel der beiden Achsen jede Position im Bereich der XY-Ebene einnehmen, solange sich diese Position im Bereich der Bewegungsmöglichkeiten der Führung befindet. Beim Einsatz eines XY-Tisches in einem linearen Transportsystem ist es jedoch erforderlich, auf dem Schlitten einen weiteren Achsantrieb zu realisieren, z. B. in Form eines motorgetriebenen Gewindes oder auch eines weiteren Linearmotors, um eine zweidimensionale Bewegung ausführen zu können. Dies hat jedoch zur Konsequenz, dass der Schlitten nicht mehr passiv kabellos ausgeführt werden kann.
Aus der US 2009 010 78 06 A1 ist ein lineares Transportsystem mit einem XY-Tisch bekannt, bei dem ein XY-Tisch eine Tragestruktur mit zwei einachsigen Linearführungssysteme aufweist, die mit einem Winkelversatz zueinander ausgeführt sind. Die beiden einachsigen Linearführungssysteme sind jeweils einem Transportschlitten zugeordnet. Über eine Relativbewegung der beiden den XY-Tisch tragenden Schlitten zueinander, kann die Tragestruktur quer entlang der beiden Linearführungen zum Verfahrweg verschoben oder auf der Seite gekippt oder um eine an den tragenden Schlitten orthogonale Achse gedreht werden. Die KR 10 2003 006 756 A zeigt ein Lineartransportsystem mit zwei Schlitten, die durch Ändern ihres relativen Abstandes die Bewegung eines Auflagetisches bewirken. Aus der WO 2011 131 385 A1 sind Linearschlitten bekannt, die seitlich an einer Tragstruktur laufen können.

Aufgabe der Erfindung ist es, einen einfach aufgebauten und kostengünstigen herzustellenden XY-Tisch für ein lineares Transportsystem mit einem gekurvten Schlitten-Führungsschienenabschnitt zu schaffen.
Diese Aufgabe wird mit einem linearen Transportsystem nach unabhängigen Ansprüchen gelöst. Bevorzugte Weiterbildungen sind in den abhängigen Ansprüchen angegeben.
Das lineare Transportsystem weist eine Schlitten-Führungsschiene mit einem ersten und einem zweiten Schlitten auf, die unabhängig voneinander beweglich an der Schlittenführung angeordnet sind. Der XY-Tisch für dieses lineare Transportsystem umfasst eine Tragestruktur und eine erste und eine zweite Linearführung, die mit einem Winkelversatz zueinander ausgeführt sind und die jeweils ein erstes und ein zweites Führungselement aufweisen, die entlang einer linearen Bahn gegeneinander verschoben werden können. Die ersten Führungselemente der ersten und zweiten Linearführung sind dabei mit der Tragestruktur verbunden. Das zweite Führungselement der ersten Linearführung kann mit dem ersten Schlitten und das zweite Führungselement der zweiten Linearführung mit dem zweiten Schlitten verbunden werden.
Dieser XY-Tisch ermöglicht eine Auslegung des linearen Transportsystems für den XY-Tisch mit einem aktiven bestrombaren Verfahrweg, entlang dem die Schlitten-Führungsschiene angeordnet ist, und passiven kabellosen Schlitten auf der Schlitten-Führungsschiene. Die beiden einachsigen Linearführungssysteme des XY-Tisches sind jeweils einem Schlitten zugeordnet, die unabhängig voneinander gesteuert und bewegt werden können. Durch das synchrone Verfahren der beiden den XY-Tisch tragenden Schlitten kann der XY-Tisch entlang der Verfahrweges verschoben werden. Über eine Relativbewegung der beiden den XY-Tisch tragenden Schlitten zueinander, bei der Abstand zwischen den Schlitten verändert wird, kann die Tragestruktur quer entlang der beiden Linearführungen zum Verfahrweg verschoben werden. Der XY-Tisch kann so in dem durch die Länge der beiden Linearführungen aufgespannten zweidimensionalen Arbeitsraum jede gewünschte Position anfahren.

Der XY-Tisch selbst ist einfach aufgebaut und kostengünstig herzustellen. Das lineare Transportsystem mit dem XY-Tisch kann in einem Produktions- und Fertigungsprozess eingesetzt werden, bei dem eine XY-Bewegung in einer Bearbeitungsstation und zugleich ein Transport über eine längere Strecke erforderlich sind. Der XY-Tisch mit dem zu bearbeitenden Werkstück kann dabei ohne Umladen mehrere Bearbeitungsstationen abfahren. Die Bearbeitungsstationen selbst erfordern keine zusätzlichen Aktuatoren, um eine zweidimensionale Bewegung auszuführen.

Um eine beliebige, auch gekurvte, Ausgestaltung des Verfahrweges des linearen Transportsystems zu ermöglichen und insbesondere auch eine geschlossene Schlitten-Führungsschiene ausführen zu können, ist der XY-Tisch in zwei Varianten ausgestaltet sein.

Zum Verfahren der Schlitten entlang eines gekurvten Schlitten-Führungsschienenabschnitts sind in einer ersten Variante die erste und zweite Linearführung des XY-Tisches parallel zur Bahnebene der Schlitten-Führungsschiene ausgerichtet, wobei die ersten Führungselemente der ersten und zweiten Linearführungen mit der Tragestruktur und/oder die zweiten Führungselemente der ersten und zweiten Linearführungen mit dem ersten bzw. dem zweiten Schlitten drehbar in der Bahnebene der Schlitten-Führungsschiene verbunden sind. Bei dieser Variante wird die Tragestruktur des XY-Tisches parallel zur Bahnebene des linearen Transportsystems bewegt, wobei durch die drehbare Aufhängung an den beiden Schlitten eine Kurvenfahrt möglich wird. Die Drehvorrichtung kann dabei zwischen den beiden Linearführungen und den beiden Schlitten bzw. den beiden Linearführungen der Tragestruktur vorgesehen sein. Bevorzugt ist es dabei, die Drehvorrichtungen in Form von Drehgelenken zwischen dem ersten und zweiten Schlitten und dem ersten und zweiten Führungselementen der ersten und zweiten Linearführungen auszuführen, wodurch sich ein kompakter Aufbau ergibt.

Gemäß einer zweiten Variante des XY-Tisches sind die ersten und zweiten Linearführungen in einer Orientierungsebene senkrecht zur Bahnebene der Schlitten-Führungsschiene ausgerichtet, wobei die ersten Führungselemente der ersten und zweiten Linearführungen mit der Tragestruktur und/oder die zweiten Führungselemente der ersten und zweiten Linearführungen mit dem ersten Schlitten bzw. dem zweiten Schlitten kippbar in der Orientierungsebene verbunden sind. Bei dieser Variante kann der XY-Tisch entlang des Verfahrweges senkrecht zur Bahnebene des linearen Transportsystems bewegt werden, wobei die Kippbewegung des XY-Tisches in der Orientierungsebene bezogen auf die beiden Schlitten es ermöglicht, eine Kurvenfahrt durchzuführen. Die Kippvorrichtung kann dabei wiederum zwischen den beiden Linearführungen und der Tragestruktur bzw. den beiden Linearführungen und den beiden Schlitten angeordnet sein. Bevorzugt ist es aber, die Kippvorrichtung in Form von zwei U-Profilen auszuführen, die parallel zur Bahnebene drehbar an den Schlitten angeordnet sind und die zweiten Führungselemente der ersten und zweiten Linearführungen tragen. Mit dieser Ausgestaltung wird ein kompakter Aufbau des XY-Tisches erreicht.

Gemäß einer Ausführungsform des XY-Tisches sind die ersten Führungselemente der ersten und zweiten Linearführung jeweils Führungsschienen und die zweiten Führungselemente der ersten und zweiten Linearführung jeweils Gleitelemente. Mit dieser Auslegung der Linearführungen ist ein kostengünstiger Aufbau des XY-Tisches möglich. Die Führungsschienen für den XY-Tisch lassen sich in einem beliebigen Winkel zueinander an der Tragestruktur anordnen und zu den an den Schlitten anzuordnenden Gleitelementen ausrichten. Die für den XY-Tisch gewünschten Bewegungsmöglichkeiten lassen sich somit auf einfache Weise bewerkstelligen.

Gemäß einer weiteren Ausführungsform weist der XY-Tisch eine Kippeinrichtung mit einem Kippgelenk auf, an dem ein Auslöseelement befestigt ist. Auf der Schlitten-Führungsschiene des Transportsystems ist ein weiterer Schlitten mit einem Kippelement vorgesehen, das ausgelegt ist, beim Eingriff mit dem Auslöseelement das Kippgelenk am XY-Tisch zu betätigen, um eine Kippbewegung der Tragestruktur des XY-Tisches herbeizuführen. In dieser Ausgestaltung kann zusätzlich zur zweidimensionalen Bewegung des XY-Tisches eine Bewegung in die dritte Dimension in Form eines Kippvorgangs der Tragestruktur ausgeführt werden. Der XY-Tisch kann so z. B. zum Ausschleusen eines auf dem linearen Transportsystem transportierten Werkstückes genutzt werden. Der Kippvorgang wird dabei durch das lineare Transportsystem selbst gesteuert, indem der weitere Schlitten mit dem Kippelement im Zusammenspiel mit dem Auslöseelement am Kippgelenk des XY-Tisches die Kippbewegung der Tragestruktur herbeiführt. Der Auslösemechanismus ist einfach aufgebaut und lässt sich ohne großen zusätzlichen Aufwand im Rahmen des linearen Transportsystems realisieren.

Gemäß einer weiteren Ausführungsform weist der XY-Tisch eine dritte Linearführung auf, die zwischen den zweiten Führungselementen der ersten und zweiten Linearführungen und dem ersten bzw. dem zweiten Schlitten angeordnet und ausgelegt ist, den ersten und zweiten Schlitten entlang einer linearen Bahn gegeneinander zu verschieben. Mit der weiteren Linearführung besteht die Möglichkeit, eine zusätzliche Verbindung zwischen den beiden den XY-Tisch tragenden Schlitten des linearen Transportsystems herzustellen, wodurch sich eine erhöhte Stabilität des Systems erreichen lässt. Bevorzugt ist es dabei, die dritte Linearführung mit einer Führungsschiene und einem Gleitelement auszugestalten, wobei die Führungsschiene mit dem einen Schlitten und das Gleitelement mit dem anderen Schlitten verbunden ist. Um eine Relativbewegung zwischen den beiden Schlitten und damit eine zweidimensionale Bewegung des XY-Tisches zu erreichen, muss so nur ein Schlitten, nämlich der, der das Gleitelement führt, bewegt werden, wodurch sich ein kompakter Aufbau erzielen lässt.

Die Schlitten-Führungsschiene des linearen Transportsystems kann als geschlossene Bahn ausgeführt werden, wodurch mit dem XY-Tisch eine umlaufende Transportbewegung durchgeführt werden kann. Das lineare Transportsystem ist gemäß einer Ausführungsform so ausgeführt, dass die Schlitten-Führungsschiene auf einem Stator angeordnet ist, der eine Reihenanordnung individuell bestrombarer Spulen aufweist, wobei die Schlitten jeweils wenigstens einen Permanentmagneten umfassen, der ausgelegt ist, mit dem von der Reihenanordnung individuell bestrombaren Spulen gebildeten Magnetfeld wechselzuwirken. In dieser Ausgestaltung des linearen Transportsystems ist eine dynamische Ansteuerung der einzelnen Spulen möglich, so dass für jeden Schlitten ein eigenes drehfeldäquivalentes Wanderfeld erzeugt werden kann, um den Schlitten zu bewegen und damit auf einfache Weise die gewünschte Bewegung des XY-Tisches auszuführen.

Die Erfindung wird anhand der beigefügten Figuren näher erläutert. Es zeigen:
Figur 1 eine gerade Motormodulanordnung eines linearen Transportsystems mit einem XY-Tisch in perspektivischer Ansicht;
Figuren 2A, 2B und 2C Aufsichten auf den in Figur 1 gezeigten XY-Tisch in drei unterschiedlichen Positionierungen;
Figur 3 einen Kurvenabschnitt eines linearen Transportsystems mit einer Ausgestaltung eines XY-Tisches in perspektivischer Ansicht;
Figur 4 eine Aufsicht auf ein lineares Transportsystem mit einem Kurvenabschnitt, auf dem vier XY-Tische mit der in Figur 3 gezeigten Ausgestaltung angeordnet sind;
Figur 5 einen Kurvenabschnitt eines linearen Transportsystems mit einer weiteren Ausgestaltung eines XY-Tisches in perspektivischer Ansicht;
Figur 6A und 6B eine Aufsicht und eine Seitenansicht eines linearen Transportsystems mit einem Kurvenabschnitt, auf dem vier XY-Tische mit der in Figur 3 gezeigten Ausgestaltung angeordnet sind; und
Figuren 7A und 7B einen Ausschnitt eines linearen Transportsystems mit einer weiteren Ausführungsform des XY-Tisches mit einer Kippeinrichtung in perspektiver Ansicht, wobei die drei Figuren den Ablauf eine Kippbewegung mithilfe eines auf einem weiteren Schlitten angeordneten Kippelements zeigen.

In der Produktion und Fertigung, insbesondere mit verteilt angeordneten Bearbeitungsstationen, spielen Transportsysteme eine wichtige Rolle. Eine wesentliche Zielsetzung ist dabei, eine hohe Flexibilität beim Transport der zu bearbeitenden Werkstücke zwischen den einzelnen Bearbeitungsstationen zu erzielen. Hierfür eignen sich insbesondere lineare Transportsysteme, bei denen mehrere voneinander unabhängig bewegliche Schlitten entlang einer Führung verfahren werden können.

Bevorzugt sind dabei lineare Transportsysteme, bei denen der Motor im Verfahrweg angeordnet ist, wohingegen die Schlitten passiv kabellos ausgeführt sind. Mit solchen linearen Antriebssystemen lassen sich lange Transportstrecken realisieren. Ferner ist dann auch möglich, einen geschlossenen Verfahrweg zu bilden, um eine umlaufende Transportbewegung zu realisieren. Die Erfindung wird nachfolgend anhand eines solchen linearen Transportsystems mit im Verfahrweg angeordnetem Motor und kabellosen Schlitten erläutert. Es besteht jedoch auch die Möglichkeit, ein lineares Transportsystem einzusetzen, bei dem der Motor in den Schlitten realisiert ist. Neben dem dargestellten elektrischen Antrieb kann eine anders geartete Antriebstechnik, z. B. ein hydraulischer oder ein pneumatischer Antrieb eingesetzt werden.

Das in den Figuren dargestellte lineare Transportsystem ist als Linearmotor aufgebaut, bei dem Einzelspulen entlang eines Verfahrweges angeordnet sind. Der Verfahrweg weist weiter eine Schlitten-Führungsschiene auf, auf der die beweglichen Schlitten verschiebbar angeordnet sind. Die beweglichen Schlitten sind dabei mit Permanentmagneten bestückt. Über die dynamische Ansteuerung der einzelnen Spulen entlang des Verfahrweges wird für jeden Schlitten ein eigenes drehfeldäquivalentes Wanderfeld erzeugt, mit dem die Schlitten getrennt verfahren werden können.

Das lineare Transportsystem weist einen Stator auf, der die Reihenanordnung individuell bestrombarer Spulen umfasst. Der Stator ist dabei entsprechend dem gewünschten Verfahrweg ausgeformt und trägt eine Schlitten-Führungsschiene. Auf der Schlitten-Führungsschiene sind die Schlitten angeordnet, die jeweils mit Permanentmagnetplatten versehen sind. Ferner ist ein Positionserfassungssystem vorgesehen, das bevorzugt im Stator integriert ist. Die Signale des Positionserfassungssystems werden über eine Kommunikationsverbindung an eine Steuereinheit weitergeleitet. Die Steuereinheit bestimmt aus diesen Positionssignalen die Stellung und Geschwindigkeit der einzelnen Schlitten. Die Steuereinheit legt dann weiter den Stromwert für die einzelnen Spulen im Stator fest, mit dem dann die Spulen individuell für die einzelnen Schlitten ein eigenes magnetisches Wanderfeld erzeugen, um eine gewünschte weitere Fahrbewegung der einzelnen Schlitten zu bewirken. Das lineare Antriebssystem erlaubt es somit, jeden einzelnen Schlitten zeitlich synchron innerhalb von Mikrosekunden lage- und geschwindigkeitsgeregelt exakt zu positionieren.

Der Stator setzt sich aus einzelnen Motormodulen zusammen, die aneinander gereiht den Verfahrweg bilden. Die Motormodule können gerade oder auch bogenförmig ausgeführt sein. Durch entsprechendes Zusammensetzen von geraden und bogenförmigen Motormodulen besteht die Möglichkeit, eine beliebige Fahrwegausformung, insbesondere auch einen geschlossenen Fahrweg, zu bilden.

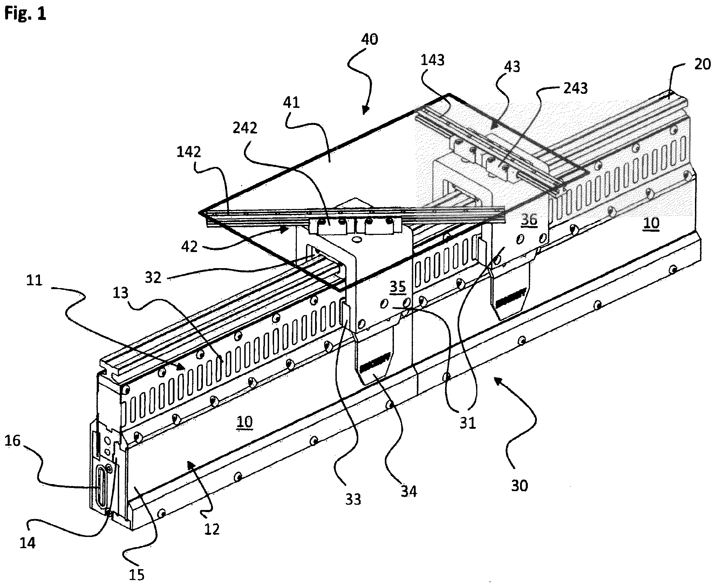

Figur 1 zeigt ein lineares Transportsystem mit zwei Motormodulsegmenten 10. Jedes Motormodul 10 weist einen Spulenbereich 11 auf, der auf einem Trägerbereich 12 angeordnet ist. Der Spulenbereich 11 setzt sich aus einer Reihe quer angeordneter Spulen 13 zusammen, die jeweils zur Ansteuerung mit einer im Trägerbereich 12 integrierten Leistungselektronik 14 verbunden sind. Ferner ist in einer Wandung des Trägerbereichs 12 eine Positionserfassung 15 vorgesehen. Die Leistungselektronik 14 und die Positionserfassung 15 der einzelnen Motormodule sind über eine seitlich im Trägerbereich 12 angeordnete Kontakteinrichtung 16, die sich auf der einen Seite aus einer vorstehenden Kontaktierplatte (nicht gezeigt) und auf der anderen Seite aus einem Kontaktschlitz zusammensetzt, verbunden. Alternativ kann auch jedes Motormodul 10 beidseitig einen Kontaktschlitz aufweisen, in den eine zusätzliche Verbindungsplatine einschiebbar ist, die zwei benachbarte Motormodule 10 miteinander koppelt und so die Kontakteinrichtung 16 ausbildet. An einzelnen Motormodulen 10 ist ferner eine Einspeisung (nicht gezeigt) vorgesehen, mittels der die Datenkommunikation mit der Steuerung und die Anbindung an die Leistungsversorgung erfolgt.

Auf dem Spulenbereich 11 der Motormodule 10 ist die Schlitten-Führungsschiene 20 angeordnet. Diese ist vorzugsweise ebenfalls modular aufgebaut und entsprechend der Motormodule segmentiert. Die Schlitten-Führungsschiene 20 kann sich jedoch auch über mehrere Motormodule 10 erstrecken. Die Geometrie der Schlitten-Führungsschiene 20 ist dabei an die Laufeinrichtung der auf der Schlitten-Führungsschiene 20 geführten Schlitten angepasst.

Figur 1 zeigt eine auf der Schlitten-Führungsschiene 20 angeordnete Doppel-Schlittenanordnung 30, die als Antrieb für einen XY-Tisch dient. Die Schlitten 35, 36 der Doppel-Schlittenanordnung 30 besitzen jeweils ein im Querschnitt U-förmiges Trageprofil 31, das die Schlitten-Führungsschiene 20 und den darunterliegenden Spulenbereich 11 des Motormoduls 10 umgreift. Im Inneren des Schlitten-Trageprofils 31 ist im Bereich der Führungsschiene ein Laufrollensystem 32 als Laufeinrichtung angeordnet, dessen Ausgestaltung auf die Geometrie der Schlitten-Führungsschiene 20 abgestimmt ist, wodurch sich gute Laufeigenschaften und ein geringer Verschleiß ergeben. Alternativ kann anstelle des Laufrollensystems 32 auch ein System aus geeigneten Gleitelementen mit der Schlitten-Führungsschiene 20 in Eingriff gebracht werden.

Dem Spulenbereich 11 der Motormodule 10 gegenüberliegend, weisen die Schlitten-Trageprofile 31 in ihrer Innenseite jeweils eine Permanentmagnet-Plattenanordnung 33 auf. Die Permanentmagneten wirken mit den Spulen 13 im Spulenbereich 11 zusammen, wobei das von den Spulen 13 gebildete magnetische Wanderfeld durch Wechselwirkung mit dem Permanentmagneten eine Vortriebskraft auf die Schlitten ausübt, um deren Lage und Geschwindigkeit geregelt zu positionieren.

An einem Arm des Schlitten-Trageprofils 31, der Positionserfassung 15 gegenüberliegend, schließt sich eine Geberfahne 34 an. Die Positionserfassung 15 ist als induktives Sensorsystem ausgebildet, bei dem die Geberfahne 34 des Schlittens eine Störung hervorruft, die von der Positionserfassung 15 in ein Positionssignal umgesetzt wird.

Das lineare Transportsystem erlaubt grundsätzlich eine einachsige Bewegung entlang des Verfahrwegs. Mit dem Schlitten des linearen Transportsystems lassen sich in einem Produktions- und Fertigungsprozess zu verarbeitende Werkstücke von Bearbeitungsstation zu Bearbeitungsstation verfahren. Zur Bearbeitung der Werkstücke in den Bearbeitungsstationen ist jedoch oft eine zweidimensionale Bewegung der Werkstücke erforderlich. Da die Schlitten im linearen Transportsystem nur in eine Richtung bewegt werden können, ist hierzu in der Regel ein Umladen der Werkstücke in den Bearbeitungsstationen erforderlich. Dies kann mit einem XY-Tisch für das lineare Transportsystem vermieden werden.

Der XY-Tisch weist eine Tragestruktur zur Aufnahme der zu bearbeitenden Werkstücke auf. Ferner sind eine erste und zweite Linearführung vorgesehen, die mit einem Winkelversatz zueinander ausgeführt sind und jeweils ein erstes und zweites Führungselement aufweisen, die entlang einer linearen Bahn gegeneinander verschiebbar sind. Das erste Führungselement der ersten und zweiten Linearführung ist mit der Tragestruktur des XY-Tisches verbunden. Das zweite Führungselement der ersten Linearführung ist mit einem ersten Schlitten und das zweite Führungselement der zweiten Linearführung mit einem zweiten Schlitten des linearen Transportsystems verbunden. Durch ein Zusammen- oder Auseinanderschieben der beiden Schlitten kann dann zusätzlich zu einem Verschieben des XY-Tisches entlang des Verfahrwegs des linearen Transportsystems eine Bewegung des XY-Tisches quer zum Verfahrweg ausgeführt werden. Der XY-Tisch ermöglicht es somit auch im Rahmen eines linearen Transportsystems eine zweidimensionale Bewegung auszuführen. Die Bewegung in X-Richtung wird durch das gemeinsame Verschieben der beiden Schlitten der Doppel-Schlittenanordnung, die den XY-Tisch trägt, ausgeführt, die Bewegung in Y-Richtung durch eine relative Verschiebung der beiden Schlitten zueinander.

Figur 1 zeigt eine erste Ausführungsform eines XY-Tisches zum Einsatz in einem linearen Transportsystem mit einem geraden Verfahrweg. Der XY-Tisch 40 weist eine Tragestruktur 41 und eine erste und zweite Linearführung 42, 43 auf. Die Tragestruktur 41 ist in Figur 1 als ebene Platte ausgestaltet und kann Objekte, z. B. zu bearbeitende Werkstücke, tragen. Es besteht jedoch auch die Möglichkeit statt einer Platte anders gestaltete Tragestrukturen, insbesondere solche, die speziell auf die zu transportierenden Objekte abgestimmte Halteeinrichtungen aufweisen, einzusetzen.

Die beiden Linearführungen 42, 43 setzen sich jeweils aus einem ersten, als Führungsschiene 142, 143 ausgebildeten Führungselement und einen zweiten, als Gleitelement 242, 243 ausgebildeten Führungselement zusammen. Die beiden Führungsschienen 142, 143 sind an der Unterseite der als Platte ausgebildeten Tragestruktur 41 mit einem Winkelversatz zueinander montiert. Um einen großen XY-Bewegungsbereich zu erzielen, ist die eine Führungsschiene, in der in Figur 1 gezeigten Ausführungsform die Führungsschiene 143 der zweiten Linearführung 43, parallel zu einer Breitseite der als Platte ausgebildeten Tragestruktur 41 montiert. Die andere Führungsschiene, in der in Figur 1 gezeigten Ausführungsform die Führungsschiene 142 der ersten Linearführung 42, erstreckt sich dagegen diagonal über die Unterseite der der als Platte ausgebildeten Tragestruktur 41.

Das Gleitelement 242 der ersten Linearführung 42 ist auf dem Schlitten-Trageprofil 31 des ersten Schlittens 35 der Doppel-Schlittenanordnung 30 und das Gleitelement 243 der zweiten Linearführung 43 auf dem Schlitten-Trageprofil 31 des zweiten Schlittens 36 der Doppel-Schlittenanordnung 30 angeordnet. Die Ausrichtung der Gleitelemente auf den Schlitten-Trageprofilen ist dabei an die Ausrichtung der zugehörigen Führungsschienen der Linearführungen angepasst. Das Gleitelement 243 der zweiten Linearführung 43 ist in der in Figur 1 gezeigten Ausführungsform deshalb quer zur Schlitten-Führungsschiene 20 auf dem Schlitten-Trageprofil 31 des zweiten Schlittens 36 orientiert, um die quer an der Tragestruktur 41 montierte Führungsschiene 143 der zweiten Linearführung 43 zu führen. Das Gleitelement 242 der ersten Linearführung 42 ist dagegen diagonal zur Schlitten-Führungsschiene 20 auf dem Schlitten-Trageprofil 31 des ersten Schlittens 35 angeordnet, um mit der diagonal angeordneten Führungsschiene 142 der ersten Linearführung 42 unter der Tragestruktur 41 zusammenzuwirken.

Bei der in Figur 1 gezeigten Ausführungsform sind die Gleitelemente 242, 243 jeweils zweiteilig ausgebildet. Anstelle einer solchen mehrteiligen Ausgestaltung können auch einteilige Gleitelemente eingesetzt werden. Bei der mehrteiligen Ausgestaltung können die einzelnen Teile der Gleitelemente auch voneinander beabstandet auf dem Schlitten-Trageprofil angeordnet sein. Die Gleitelemente 242, 243 und die Führungsschienen 142, 143 der ersten und zweiten Linearführung 42, 43 sind so ausgestaltet, dass eine im Wesentlichen reibungsfreie verschleißarme lineare Bewegung ermöglicht wird. Bei der in Figur 1 gezeigten Ausführungsform weisen die Führungsschienen ein I-Profil und die Gleitelemente ein C-Profil auf. Das C-Profil der Gleitelemente greift dabei in die Einbuchtungen im I-Profil der Führungsschienen ein. Um ein reibungsarmes Gleiten zu erreichen, können im Gleitelement auch zusätzliche Kugellager vorgesehen sein. Weiterhin besteht auch die Möglichkeit, anstelle der Gleitelemente die Führungsschienen der ersten und zweiten Linearführungen an den Schlitten anzuordnen, wohingegen dann die Gleitelemente anstelle der Führungsschienen an der Tragestruktur angeordnet sind.

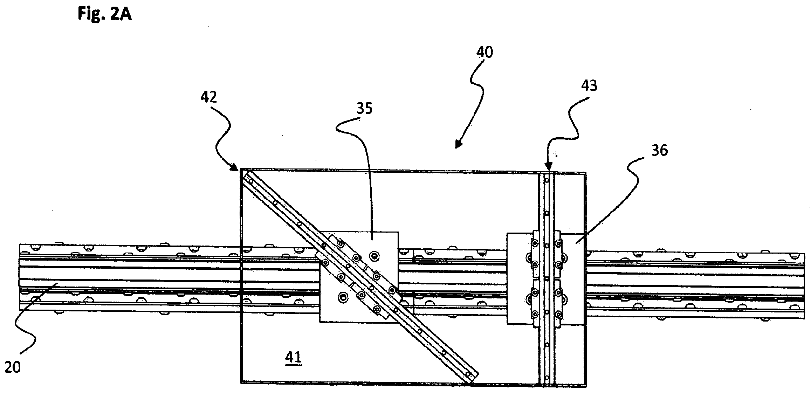

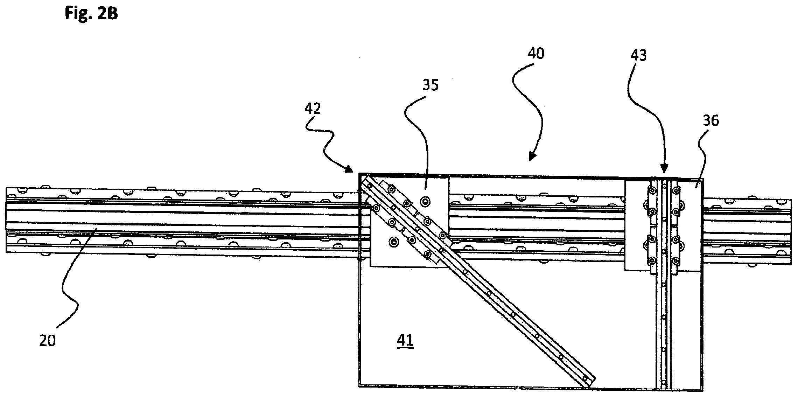

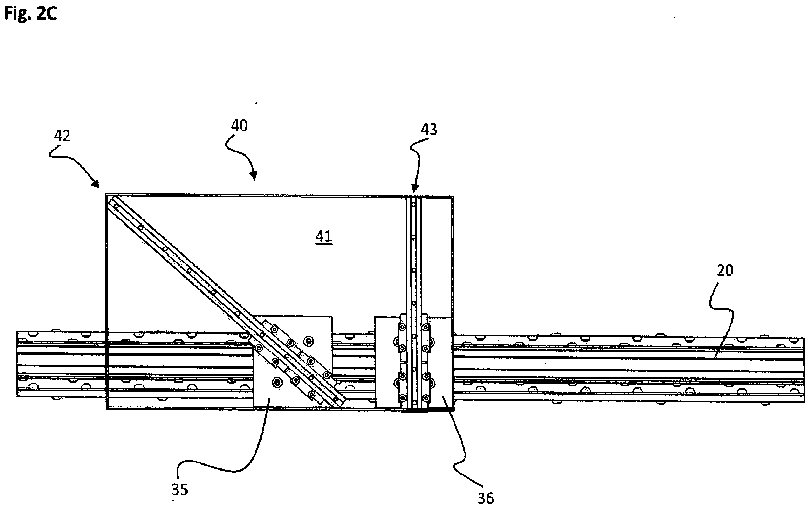

Die Figuren 2A, 2B und 2C zeigen in der Aufsicht den XY-Tisch 40 in verschiedenen XY-Positionen, wobei Figur 2A in Übereinstimmung mit der Darstellung in Figur 1 den XY-Tisch 40 in einer symmetrischen Position in Bezug auf die Schlitten-Führungsschiene 20 zeigt, bei der die Tragestruktur 41 mittig über der Schlitten-Führungsschiene 20 angeordnet ist. Die Figuren 2B und 2C zeigen den XY-Tisch 40 dann jeweils in der maximal nach links bzw. rechts gegenüber der Schlitten-Führungsschiene 20 verschobenen Positionen. Die Positionierung des XY-Tisches 40 erfolgt über das Verfahren des ersten und zweiten Schlittens 35, 36. Eine Bewegung in X-Richtung entlang der die Schlitten-Führungsschiene 20 wird durch ein synchrones Verschieben der beiden den XY-Tisch tragenden Schlitten 35, 36 erreicht. Für eine Bewegung in Y-Richtung quer zur Schlitten-Führungsschiene 20 sorgt eine Relativbewegung der beiden Schlitten zueinander. Bei der in Figur 2B gezeigten XY-Tisch-Position sind die beiden Schlitten 35, 36 der Doppel-Schlittenanordnung maximal auseinander gefahren. Bei der in Figur 2C gezeigten Position des XY-Tisches 40 dagegen weisen die beiden Schlitten 35, 36 der Doppel-Schlittenanordnung einen minimalen Abstand zueinander auf.

Der in den Figuren 1, 2A, 2B, 2C dargestellte XY-Tisch 40 für eine Linearstrecke zeichnet sich durch einen einfachen Aufbau aus und lässt sich darüber hinaus mit geringem Steueraufwand positionieren. Da die Position des XY-Tisches 40 durch die beiden den Tisch tragenden Schlitten 35, 36 des linearen Antriebssystems bestimmt wird, kann die Steuerung der Bewegung des XY-Tisches 40 vollständig im Rahmen der Schlitten-Steuerung durchgeführt werden.

Ein Einsatz des XY-Tisches 40 in einer Produktions- und Fertigungsanlage könnte z. B. folgendermaßen vonstattengehen: Der XY-Tisch 40 wird an einem Ende der Schlitten-Führungsschiene 20 mit dem zu bearbeitenden Werkstück beladen. Von dort wird der XY-Tisch 40 mit dem Werkstück dann durch synchrone Bewegung der beiden Schlitten 35, 36 der Doppel-Schlittenanordnung zu den entlang der Schlitten-Führungsschiene 20 angeordneten Bearbeitungsstationen verfahren. In den Bearbeitungsstationen kann dann der XY-Tisch durch entsprechendes Verändern des Abstandes zwischen den beiden Schlitten 35, 36 der Doppel-Schlittenanordnung 30 zusätzlich eine Querbewegung ausführen. Wenn die Bearbeitungsstation z. B. eine Druckluftreinigungsstation ist, kann der XY-Tisch 40 mit dem Werkstück eine Zickzackbewegung unter einer Druckluftdüse ausführen, um das Werkstück zu reinigen. Wenn das Werkstück z. B. ein Behälter ist, auf dem ein Deckel aufgebracht werden soll, kann der Behälter nach der Reinigung dann zu einer Klebestation weitergefahren werden, in der mithilfe einer ortsfesten Klebedüse Klebstoff auf den Behälterrand aufgebracht werden soll. Hierzu wird der XY-Tisch 40 mit dem Behälter durch entsprechende Steuerung der beiden Schlitten 35, 36 der den XY-Tisch 40 tragenden Doppel-Schlittenanordnung dann so bewegt, dass der Behälterrand unter der ortsfesten Klebedüse entlang geführt wird. Anschließend kann dann der Behälter zu einer Deckelspenderstation transportiert werden, bei der der Deckel auf den Behälter aufgedrückt wird. Zur besseren Verbindung der beiden Teile kann dann der Behälter durch entsprechendes Verfahren des XY-Tisches 40 eine kreisende Bewegung unter einer Anpresseinrichtung ausführen. Anschließend kann dann der Behälter mit Deckel zum Aushärten noch zu einer UV-Station transportiert werden.

Das lineare Transportsystem mit gerader Streckenführung und XY-Tisch 40 eignet sich auch zum Transport von Werkstücken zu einer Bearbeitungsstation, die eine Gefährdung für Menschen darstellt. Mit dem linearen Antriebssystem kann ein Abstand zu diesem potentiell gefährlichen Bereich hergestellt werden. Der gefährliche Bereich kann dabei durch eine Abschirmung bestehend aus zwei gegeneinander versetzten Kulissen abgetrennt sein. Der XY-Tisch 40 kann dann ein Werkstück an dieser Abschirmung durch eine Rechts-Links-Bewegung vorbeiführen. Mit einer solchen Ausgestaltung kann auf ein bewegliches Schutzgitter zur Abschirmung des gefährlichen Bereichs verzichtet werden.

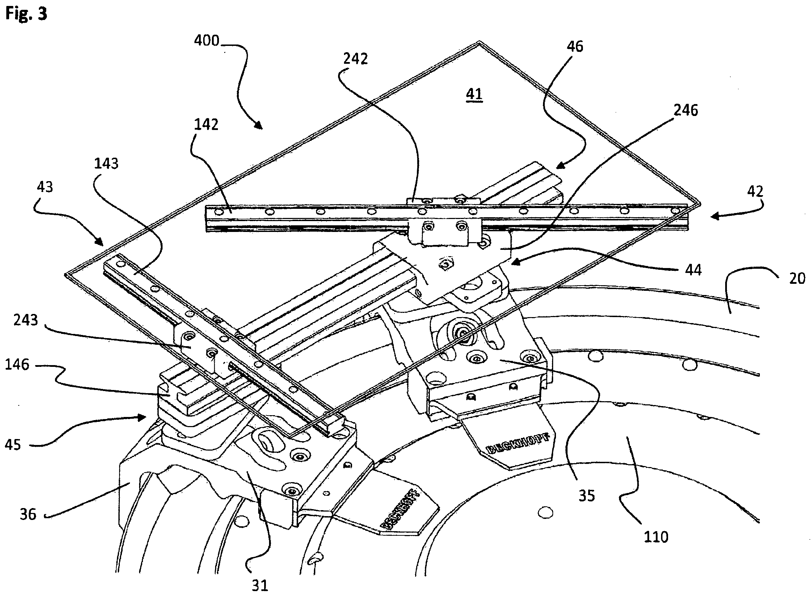

Beim Einsatz linearer Antriebssysteme in der Fertigung und Produktion zum Transport von Werkstücken sind oft unendlich umlaufende Transportbewegungen gewünscht. Bei solchen linearen Antriebssystemen mit geschlossenem Verfahrweg ist jedoch eine Kurvenfahrt der Schlitten erforderlich. Figur 3 zeigt das lineare Antriebssystem mit dem anhand Figur 1 erläuterten Aufbau, das einen Kurvenabschnitt umfasst. Ferner ist in Figur 3 eine Auslegung eines XY-Tisches 400 dargestellt, der von einer Doppel-Schlittenanordnung getragen wird und den Kurvenabschnitt durchfahren kann. Das gekurvte Motormodul 110 ist in Figur 3 liegend angeordnet. Der XY-Tisch 400 wird parallel zur Bahnebene des gekurvten Motormoduls 110, die durch die Schlitten-Führungsschiene 20 definiert ist, verfahren. Die ersten und zweiten Linearführungen 42, 43 des XY-Tisches 400 sind parallel zur Bahnebene des gekurvten Motormoduls 110 ausgerichtet. Dabei sind, wie Figur 3 gezeigt, die Gleitelemente 242, 243 der ersten und zweiten Linearführungen 42, 43 seitlich am Schlitten-Trageprofil 31 des ersten bzw. zweiten Schlittens 35, 36 der Doppel-Schlittenanordnung 30 angeordnet.

Zwischen den Gleitelementen 242, 243 der ersten und zweiten Linearführungen 42, 43 und dem Schlitten-Trageprofil 31 des ersten bzw. zweiten Schlittens 35, 36 sind ferner jeweils Drehgelenke 44, 45 vorgesehen. Bei der in Figur 3 gezeigten Ausführungsform weisen die Drehgelenke 44, 45 jeweils zwei Gelenkplatten mit einem gemeinsamen Drehpunkt auf, wobei die eine Gelenkplatte am Schlitten-Trägerprofil 31 angeordnet ist und die andere Gelenkplatte mit den Gleitelementen 242, 243 der ersten bzw. zweiten Linearführung 42, 43 in Verbindung steht.

Um eine verbesserte Stabilität des XY-Tisches 400 zu erreichen, ist bei der in Figur 3 gezeigten Ausführungsform eine weitere Linearführung 46 vorgesehen, die die beiden den XY-Tisch tragenden Schlitten 35, 36 miteinander verbindet. Die dritte Linearführung 46 besitzt wiederum eine Führungsschiene 146 und ein Gleitelement 246. Die Führungsschiene 146 und das Gleitelement 246 der dritten Linearführung 46 sind dabei ähnlich ausgelegt wie die ersten und zweiten Linearführungen 42, 43, wobei jedoch das Gleitelement 246 der dritten Linearführung 46 die Führungsschiene 146 vollständig umgreift. Die Länge der Führungsschiene 146 entspricht dabei mindestens der XY-Tischlänge.

Die Führungsschiene 146 der dritten Linearführung 46 ist zwischen dem Gleitelement 243 der zweiten Linearführung 43 und dem Drehgelenk 45 des zweiten Schlittens 36 angeordnet, wobei die Führungsschiene 146 fest mit der Unterseite des Gleitelements 243 der zweiten Linearführung 43 und der oberen Drehgelenksplatte des Drehgelenks 45 des zweiten Schlittens 36 verbunden ist. Das Gleitelement 246 der dritten Linearführung 46 ist zwischen dem Gleitelement 242 der ersten Linearführung 42, dem Drehgelenk 44 des ersten Schlittens 35 angeordnet und an der Unterseite des Gleitelements 242 und der oberen Drehgelenkplatte des Drehgelenk 45 des ersten Schlittens 35 befestigt. Die Führungsschiene 146 der dritten Linearführung 46 läuft dabei durch das Gleitelement 246 der dritten Linearführung 46 hindurch, so dass das Gleitelement 242 der ersten Linearführung 42 gemeinsam mit dem Gleitelement 246 der dritten Linearführung 46 verschoben werden kann.

Durch die zusätzliche Verbindung der beiden den XY-Tisch 400 tragenden Schlitten 35, 36 über die dritte Linearführung 46 wird eine erhöhte Steifigkeit der XY-Tischkonstruktion insbesondere bei Kurvenfahrten erreicht. Zudem sorgt die Zwangsführung der beiden Schlitten 35, 36 durch die dritte Linearführung 46 für eine exaktere Übertragung der Schlittenbewegung auf die Verschiebbewegung der Tragestruktur 41 des XY-Tisches 400. Abhängig von der Auslegung des linearen Antriebssystems und des XY-Tisches 400, insbesondere was die Kurvenradien und die Tischbreite betrifft, kann ohne weiteres auf die dritte Linearführung 46 verzichtet werden.

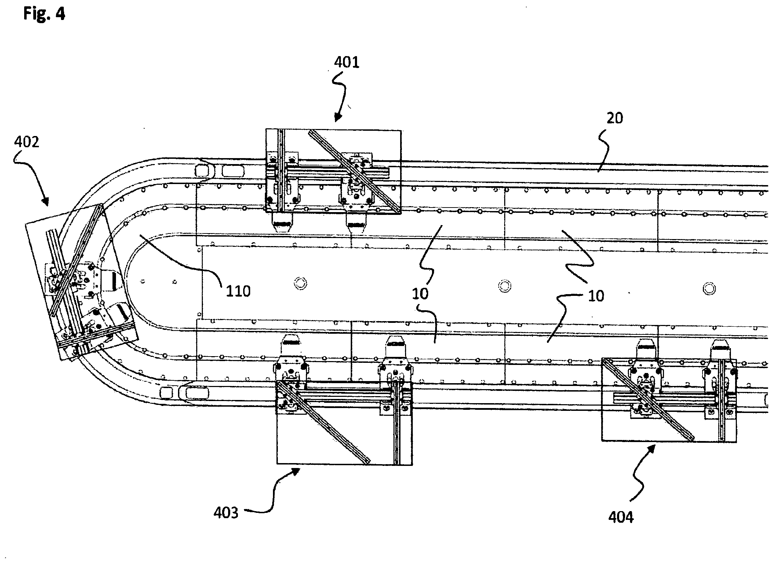

Figur 4 zeigt im Vergleich zu Figur 3 einen größeren Ausschnitt des geschlossenen linearen Transportsystems mit dem Kurven-Motormodul 110 und daran anschließenden geraden Motormodulen 10. Weiter sind vier XY-Tische 401, 402, 403, 404 in der in Figur 3 gezeigten Ausführungsform dargestellt, wobei die Tragestrukturen der vier XY-Tische 401, 402, 403, 404 sich in unterschiedlichen Positionen in Bezug auf die Schlitten-Führungsschiene 20 befinden. Bei den XY-Tischen 401, 402 befindet sich die Tragestruktur in Bezug auf die Schlitten-Führungsschiene in einer Mittenposition. Die XY-Tische 403, 404 zeigen Tragestruktur-Positionen, die jeweils quer zur Schlitten-Führungsschiene 20 verschoben sind.

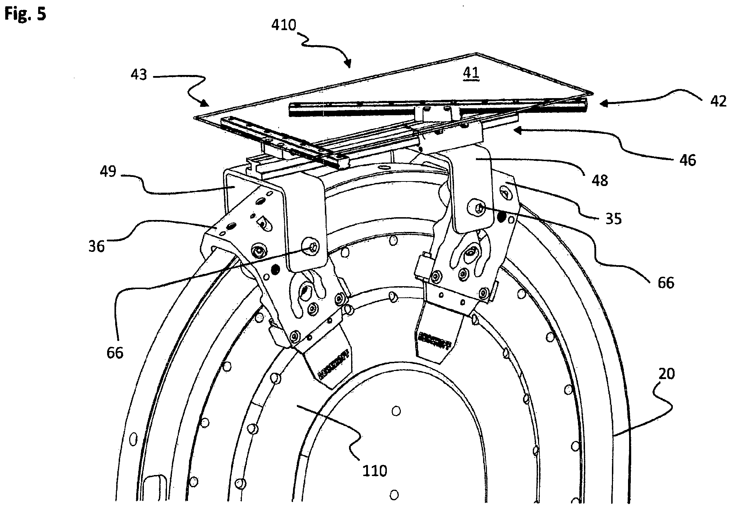

Figur 5 zeigt eine weitere mögliche Ausgestaltung eines XY-Tisches 410, der auf einem linearen Transportsystem mit Kurvenabschnitten betrieben werden kann. Analog zu dem in Figur 1 gezeigten XY-Tisch wird die Tragestruktur 41 des XY-Tisches 410 entlang der Stirnfläche der Schlitten-Führungsschiene 20 des Kurven-Motormoduls 110 geführt. Die ersten und zweiten Linearführungen 42, 43 des XY-Tisches 410 liegen deshalb in einer Orientierungsebene senkrecht zur durch die Schlitten-Führungsschiene 20 begrenzten Bahnebene. Um eine Kurvenfahrt des XY-Tisches 410 zu ermöglichen, sind die Gleitelemente 242, 243 der ersten und zweiten Linearführungen 42, 43 in der Orientierungsebene kippbar mit dem ersten bzw. zweiten Schlitten 35, 36 verbunden. Bei der in Figur 5 gezeigten Ausführungsform wird diese Kippbewegung durch zwei im Querschnitt U-förmige Drehgestelle 48, 49 ermöglicht, die jeweils das Trageprofil 31 des ersten bzw. zweiten Schlittens 35, 36 umgreifen und an beiden Seitenflächen des Schlitten-Trageprofils um den Drehpunkt 66 drehbar befestigt sind. Auf der Stirnfläche des U-Profils der beiden Drehgestelle 48, 49 ist dann der XY-Tisch 410 mit den ersten und zweiten Linearführungen 42, 43 angeordnet.

Bei der in Figur 5 gezeigten Ausgestaltung des XY-Tisches 410 ist, ähnlich wie in der in Figur 3 gezeigten Ausführungsform, eine als Zwangsführung dienende dritte Linearführung 46 zwischen den beiden Schlitten 35, 36 der Doppel-Schlittenanordnung 30 vorgesehen, die die U-Profile der beiden Drehgestelle 48, 49 miteinander verbindet. Es ist jedoch auch ein Aufbau ohne zwischengeschaltete dritte Linearführung möglich, bei der die U-förmigen Drehgestelle direkt mit den Gleitelementen 242, 243 der ersten und zweiten Linearführung 42, 43 des XY-Tisches 410 verbunden sind.

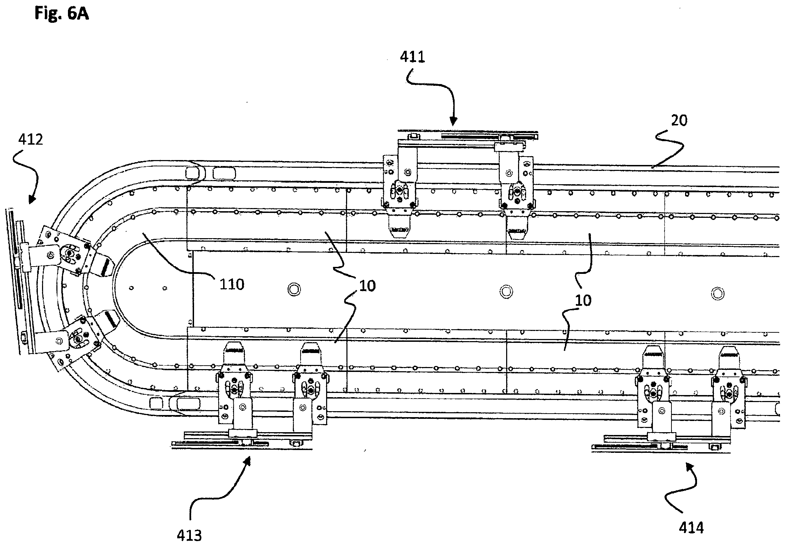

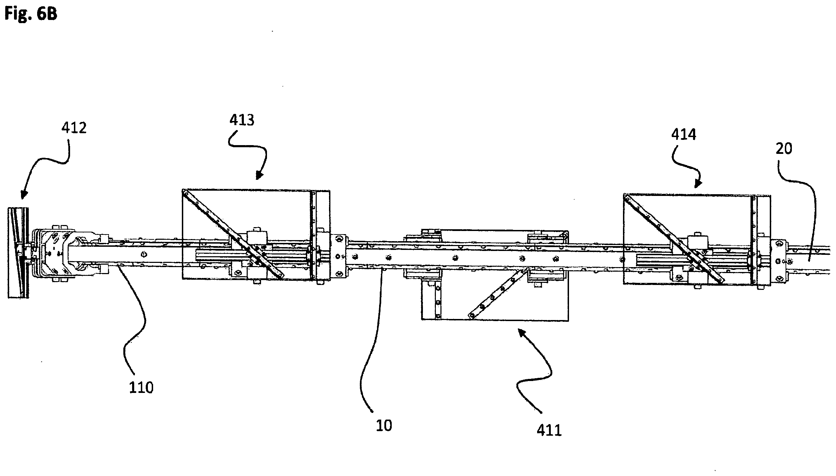

Die Figur 6A und 6B zeigen, ähnlich wie Figur 4, einen größeren Ausschnitt des geschlossenen linearen Transportsystems mit dem Kurven-Motormodul 110 und daran anschließenden geraden Motormodulen 10. Ferner sind vier XY-Tische 411, 412, 413, 414 mit unterschiedlicher Positionierung der Tragestruktur bezüglich der Schlitten-Führungsschiene 20 gezeigt. Figur 6A gibt eine Seitenansicht und Figur 6B eine Aufsicht wieder. Bei den XY-Tischen 411, 413, 414 ist, wie Figur 6B zeigt, die Tragestruktur gegenüber der Mittellage über der Schlitten-Führungsschiene 20 verschoben. Die Tragestruktur des XY-Tisches 412 dagegen ist symmetrisch über der Schlitten-Führungsschiene 20 angeordnet.

Das lineare Transportsystem mit Kurven-Motormodulen und einer XY-Tisch-Ausführung, wie sie in den in Figuren 3 bzw. 5 gezeigt ist, eignet sich neben dem Einsatz in Produktions- und Fertigungsprozessen, bei der ein umlaufender Transport gewünscht wird, vor allem auch zum Transport von Werkstücken im Sicherheitsbereich. So kann z. B. mit einem solchen linearen Transportsystem ein Werkstück hinter eine Schutzwand nach einer Kurve verfahren werden. Der Bediener des linearen Transportsystems ist dann von dem sich hinter der Schutzwand befindenden Bereich, in dem z. B. eine gefährliche Strahlung vorliegen kann, zuverlässig geschützt, da im Gegensatz zu einer geraden Strecke keine Sichtverbindung mit diesem Bereich besteht.

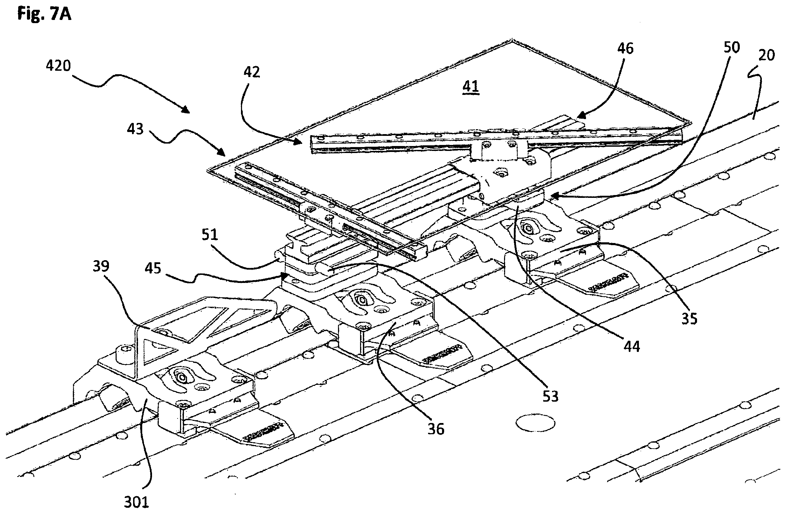

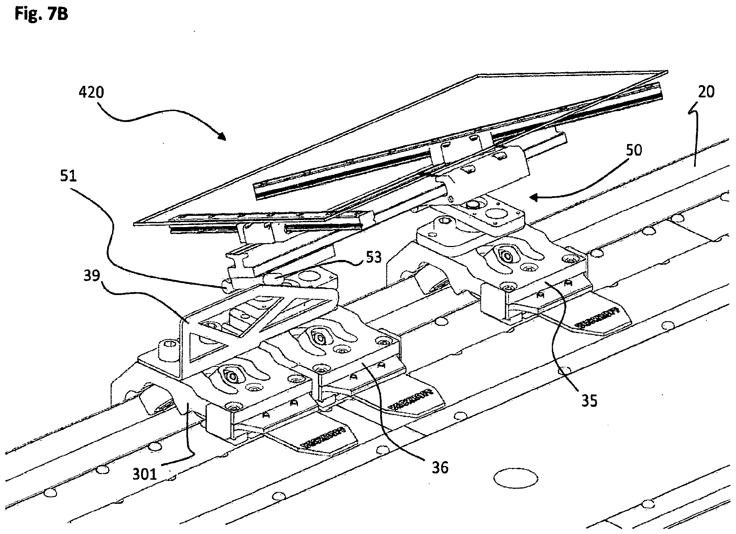

Die Figuren 7A und 7B zeigen eine Ausführung des XY-Tisches mit einer zusätzlichen Kippfunktion, die z. B. dazu dienen kann, Werkstücke, die sich auf der Tragestruktur des XY-Tisches befinden, zu entladen. Grundsätzlich kann eine solche zusätzliche Kippeinrichtung für den XY-Tisch sowohl zwischen den ersten Führungselementen der ersten und zweiten Linearführungen und der Tragestruktur des XY-Tisches oder zwischen den zweiten Führungselementen der ersten und zweiten Linearführungen und den ersten und zweiten Schlitten der Doppel-Schlittenanordnung ausgeführt sein, wobei die Kippeinrichtung in der Regel quer zur Schlitten-Führungsschiene kippbar ausgelegt ist.

Der in den Figuren 7A und 7B gezeigte XY-Tisch-Aufbau 420 entspricht weitgehend der in Figur 3 gezeigten Ausführungsform, bei dem die Tragestruktur parallel zur der durch die Schlitten-Führungsschiene 20 definierten Bahnebene angeordnet und bei dem jeweils seitlich an den beiden Schlitten der Doppel-Schlittenanordnung ein Drehgelenk vorgesehen ist. Zwischen den Drehgelenken 44, 45 und der dritten Linearführung 46 ist jeweils zusätzlich ein Klappgelenk 50, 51 vorgesehen, das die obere Drehgelenkplatte der Drehgelenke mit der Führungsschiene 146 bzw. dem Gleitelement 246 der dritten Linearführung 46 des XY-Tisches verbindet.

Die Klappgelenke 50, 51 sind dabei in Form von Klappen ausgeführt, wobei die untere Klappenplatte jeweils durch die oberen Drehgelenkplatte gebildet wird. Um die Kippbewegung auszulösen, ist seitlich am Klappgelenk 51 des zweiten Schlittens 36 der Gelenkseite gegenüberliegend an der oberen Klappenplatte ein Führungsdorn 53 angeordnet, mit dem die obere Klappenplatte angehoben und der Kippvorgang ausgelöst werden kann.

Zum Auslösen der Kippbewegung ist ein weiterer Schlitten 301 auf dem linearen Transportsystem angeordnet, der eine Anhebeeinrichtung 39 trägt, die seitlich vom Schlitten-Trageprofil absteht und die Form eines rechtwinkligen Trapezes mit einer über den Schlitten vorstehenden Rampe aufweist. Wie die Figuren 7A und 7B zeigen, kann durch Heranfahren des dritten Schlittens 301 an den zweiten Schlitten 36 die Rampe der Anhebeeinrichtung 39 unter den Führungsdorn 53 am Klappgelenk 51 des zweiten Schlittens 36 geschoben werden, wobei die obere Klappplatte angehoben und damit der Kippvorgang eingeleitet wird.

Das Auslösen des Kippvorgangs des XY-Tisches 420 mit einem zusätzlichen Schlitten ermöglicht es, ähnlich wie bei der zweidimensionalen Bewegung des XY-Tisches, diese direkt mit dem linearen Antriebssystems selbst durchzuführen, so dass keine eigenständige Steuerung erforderlich ist. Eine Auslösung der Kippbewegung kann jedoch auch durch eine entsprechende Vorrichtung an einer Bearbeitungsstation erfolgen.

## Patentansprüche

1. Lineares Transportsystem mit
einer Schlitten-Führungsschiene (20), die einen Bogenabschnitt (110) aufweist,
einem ersten und einem zweiten Schlitten (35, 36), die unabhängig voneinander beweglich an der Schlitten-Führungsschiene (20) angeordnet sind, und
einem XY-Tisch umfassend eine Tragestruktur (41) und
eine erste und eine zweite Linearführung (42, 43), die mit einem Winkelversatz zueinander ausgeführt sind und die jeweils ein erstes und eine zweites Führungselement (142, 242, 143, 243) aufweisen, die entlang einer linearen Bahn gegeneinander verschiebbar sind,
wobei die ersten Führungselemente (142, 143) der ersten und zweiten Linearführung (42, 43) mit der Tragestruktur (41) verbunden sind,
wobei das zweite Führungselement (242) der ersten Linearführung (42) mit dem ersten Schlitten (35) und das zweite Führungselemente (243) der zweiten Linearführung (43) mit dem zweiten Schlitten (36) verbunden sind, um bei einer gemeinsamen Verschiebung der beiden Schlitten eine Bewegung des XY-Tisches entlang des Verfahrwegs in X-Richtung und bei einer relativen Verschiebung der beiden Schlitten zueinander eine Bewegung des XY-Tisches quer zum Verfahrweg in Y-Richtung auszuführen,
wobei die erste und die zweite Linearführung (42, 43) parallel zur Bahnebene der Schlitten-Führungsschiene (20) ausgerichtet sind, und
wobei die ersten Führungselemente (142, 143) der ersten und zweiten Linearführung (42, 43) mit der Tragestruktur (41) und/oder das zweite Führungselement (242) der ersten Linearführung (42) mit dem ersten Schlitten (35) und das zweite Führungselement (243) der zweiten Linearführung (43) mit dem zweiten Schlitten (36) drehbar in der Bahnebene der Schlitten-Führungsschiene verbunden sind.

2. Lineares Transportsystem mit
einer Schlitten-Führungsschiene (20), die einen Bogenabschnitt (110) aufweist,
einem ersten und einem zweiten Schlitten (35, 36), die unabhängig voneinander beweglich an der Schlitten-Führungsschiene (20) angeordnet sind, und
einem XY-Tisch umfassend eine Tragestruktur (41) und eine erste und eine zweite Linearführung (42, 43), die mit einem Winkelversatz zueinander ausgeführt sind und die jeweils ein erstes und eine zweites Führungselement (142, 242, 143, 243) aufweisen, die entlang einer linearen Bahn gegeneinander verschiebbar sind,
wobei die ersten Führungselemente (142, 143) der ersten und zweiten Linearführung (42, 43) mit der Tragestruktur (41) verbunden sind,
wobei das zweite Führungselement (242) der ersten Linearführung (42) mit dem ersten Schlitten (35) und das zweite Führungselemente (243) der zweiten Linearführung (43) mit dem zweiten Schlitten (36) verbunden sind, um bei einer gemeinsamen Verschiebung der beiden Schlitten eine Bewegung des XY-Tisches entlang des Verfahrwegs in X-Richtung und bei einer relativen Verschiebung der beiden Schlitten zueinander eine Bewegung des XY-Tisches quer zum Verfahrweg in Y-Richtung auszuführen,
wobei die erste und die zweite Linearführung (42, 43) in einer Orientierungsebene senkrecht zur Bahnebene der Schlitten-Führungsschiene (20) ausgerichtet sind, und
wobei die ersten Führungselemente (142, 143) der ersten und zweiten Linearführung (42, 43) mit der Tragestruktur (41) und/oder das zweite Führungselement (242) der ersten Linearführung (42) mit dem ersten Schlitten (35) und das zweite Führungselement (243) der zweiten Linearführung (43) mit dem zweiten Schlitten (36) kippbar in der Orientierungsebene verbunden sind.

3. Lineares Transportsystem nach Anspruch 1 oder 2, **dadurch gekennzeichnet, dass** die ersten Führungselemente (142, 143) der ersten und zweiten Linearführung (42, 43) jeweils Führungsschienen und die zweiten Führungselemente (242, 243) der ersten und zweiten Linearführung jeweils Gleitelemente sind.

4. Lineares Transportsystemnach nach einem der Ansprüche 1 bis 3, **dadurch gekennzeichnet, dass** die ersten Führungselemente (142, 143) der ersten und zweiten Linearführung (42, 43) mit der Tragestruktur (41) und/oder das zweite Führungselement (242) der ersten Linearführung (42) mit dem ersten Schlitten (35) und das zweite Führungselement (243) der zweiten Linearführung (43) mit dem zweiten Schlitten (36) jeweils über ein Drehgelenk (44, 45, 48, 49) verbunden sind.

5. Lineares Transportsystem nach einem der Ansprüche 1 bis 4, **gekennzeichnet, durch** eine Kippeinrichtung, die zwischen den ersten Führungselementen (142, 143) der ersten und zweiten Linearführung (42, 43) und der Tragestruktur (41) und/oder zwischen dem zweiten Führungselement (242) der ersten Linearführung und dem ersten Schlitten (35) und dem zweiten Führungselement (243) der zweiten Linearführung (43) und dem zweiten Schlitten (36) angeordnet und senkrecht zur Bahnebene der Schlitten-Führungsschiene (20) kippbar ausgelegt ist.

6. Lineares Transportsystem nach Anspruch 5, **dadurch gekennzeichnet, dass** die Kippeinrichtung zumindest ein Klappgelenk (50, 51) mit einem Auslöseelement (53) aufweist, wobei das lineare Transportsystem einen weiteren Schlitten (301) mit einem Kippelement (39) umfasst, das ausgelegt ist, beim Eingriff mit dem Auslöseelement das Klappgelenk (50, 51) zu betätigen, um eine Kippbewegung der Tragestruktur herbeizuführen.

7. Lineares Transportsystem nach einem der Ansprüche 1 bis 6, **gekennzeichnet, durch** eine dritten Linearführung (46), die zwischen dem zweiten Führungselemente (242) der ersten Linearführung (42) und dem ersten Schlitten (35) und zwischen dem zweiten Führungselement (243) der zweiten Linearführung (43) und dem zweiten Schlitten (36) angeordnet und so ausgelegt ist, dass der erste und der zweite Schlitten entlang einer linearen Bahn gegeneinander verschiebbar sind.

8. Lineares Transportsystem nach Anspruch 7, **dadurch gekennzeichnet, dass** die dritte Linearführung (46) eine Führungsschiene (146) und ein Gleitelement (246) aufweist, wobei die Führungsschiene mit dem ersten Schlitten (35) und das Gleitelement mit dem zweiten Schlitten (36) verbunden werden können.

9. Lineares Transportsystem nach einem der Ansprüche 1 bis 8, **dadurch gekennzeichnet, dass** die Schlitten-Führungsschiene (20) eine geschlossene Bahn bildet.

10. Lineares Transportsystem nach einem der Ansprüche 1 bis 9, **dadurch gekennzeichnet, dass** die Schlitten-Führungsschiene (20) auf einem Stator angeordnet ist, der eine Reihenanordnung individuell bestrombarer Spulen (13) aufweist, wobei die Schlitten jeweils wenigstens einen Permanentmagneten (33) umfassen, der ausgelegt, mit dem von der Reihenanordnung individuell bestrombarer Spulen gebildeten Magnetfeld wechselzuwirken.

## Claims

1. Linear transport system, having
a carriage guide rail (20), which has an arc segment (110),
a first and a second carriage (35, 36), which are arranged in such a way that they can be moved independently of one another on the carriage guide rail (20), and
an XY table comprising a carrying structure (41) and
a first and a second linear guide (42, 43), which are embodied with an angular offset relative to one another and each have a first and a second guide element (142, 242, 143, 243), which can be moved relative to one another along a linear track,
wherein the first guide elements (142, 143) of the first and second linear guides (42, 43) are connected to the carrying structure (41),
wherein the second guide element (242) of the first linear guide (42) is connected to the first carriage (35) and the second guide element (243) of the second linear guide (43) is connected to the second carriage (36) in order to carry out a movement of the XY table along the transfer path in the X direction in the case of a joint movement of the two carriages and to carry out a movement of the XY table transversely to the transfer path in the Y direction in the case of a relative movement of the two carriages,
wherein the first and the second linear guide (42, 43) are oriented parallel to the track plane of the carriage guide rail (20), and
wherein the first guide elements (142, 143) of the first and second linear guides (42, 43) are connected to the carrying structure (41) and/or the second guide element (242) of the first linear guide (42) is connected to the first carriage (35), and the second guide element (243) of the second linear guide (43) is connected to the second carriage (36), in a manner which allows rotation in the track plane of the carriage guide rail.

2. Linear transport system, having
a carriage guide rail (20), which has an arc segment (110),
a first and a second carriage (35, 36), which are arranged in such a way that they can be moved independently of one another on the carriage guide rail (20), and
an XY table comprising a carrying structure (41) and
a first and a second linear guide (42, 43), which are embodied with an angular offset relative to one another and each have a first and a second guide element (142, 242, 143, 243), which can be moved relative to one another along a linear track,
wherein the first guide elements (142, 143) of the first and second linear guides (42, 43) are connected to the carrying structure (41),
wherein the second guide element (242) of the first linear guide (42) is connected to the first carriage (35) and the second guide element (243) of the second linear guide (43) is connected to the second carriage (36) in order to carry out a movement of the XY table along the transfer path in the X direction in the case of a joint movement of the two carriages and to carry out a movement of the XY table transversely to the transfer path in the Y direction in the case of a relative movement of the two carriages,
wherein the first and the second linear guide (42, 43) are oriented in a plane of orientation perpendicular to the track plane of the carriage guide rail (20), and
wherein the first guide elements (142, 143) of the first and second linear guides (42, 43) are connected to the carrying structure (41) and/or the second guide element (242) of the first linear guide (42) is connected to the first carriage (35), and the second guide element (243) of the second linear guide (43) is connected to the second carriage (36), in a manner which allows tilting in the plane of orientation.

3. Linear transport system according to Claim 1 or 2, **characterized in that** the first guide elements (142, 143) of the first and second linear guides (42, 43) are each guide rails, and the second guide elements (242, 243) of the first and second linear guides are each sliding elements.

4. Linear transport system according to one of Claims 1 to 3, **characterized in that** the first guide elements (142, 143) of the first and second linear guides (42, 43) are connected to the carrying structure (41), and/or the second guide element (242) of the first linear guide (42) is connected to the first carriage (35), and the second guide element (243) of the second linear guide (43) is connected to the second carriage (36), in each case via a rotary joint (44, 45, 48, 49).

5. Linear transport system according to one of Claims 1 to 4, **characterized by** a tilting device, which is arranged between the first guide elements (142, 143) of the first and second linear guides (42, 43) and the carrying structure (41) and/or between the second guide element (242) of the first linear guide and the first carriage (35) and the second guide element (243) of the second linear guide (43) and the second carriage (36) and is designed to be tiltable perpendicularly to the track plane of the carriage guide rail (20).

6. Linear transport system according to Claim 5, **characterized in that** the tilting device has at least one hinge joint (50, 51) having a triggering element (53), wherein the linear transport system comprises a further carriage (301) having a tilting element (39), which is designed to actuate the hinge joint (50, 51) upon engagement with the triggering element in order to bring about a tilting movement of the carrying structure.

7. Linear transport system according to one of Claims 1 to 6, **characterized by** a third linear guide (46), which is arranged between the second guide elements (242) of the first linear guide (42) and the first carriage (35) and between the second guide element (243) of the second linear guide (43) and the second carriage (36) and is designed in such a way that the first and the second carriage can be moved relative to one another along a linear track.

8. Linear transport system according to Claim 7, **characterized in that** the third linear guide (46) has a guide rail (146) and a sliding element (246), wherein the guide rail can be connected to the first carriage (35), and the sliding element can be connected to the second carriage (36).

9. Linear transport system according to one of Claims 1 to 8, **characterized in that** the carriage guide rail (20) forms a closed track.

10. Linear transport system according to one of Claims 1 to 9, **characterized in that** the carriage guide rail (20) is arranged on a stator, which has a series arrangement of individually energizable coils (13), wherein the carriages each comprise at least one permanent magnet (33), which is designed to interact with the magnetic field formed by the series arrangement of individually energizable coils.

## Revendications

1. Système de transport linéaire comprenant
un rail de guidage de chariot (20) qui présente une section courbe (110),
un premier et un deuxième chariot (35, 36) qui sont disposés de manière déplaçable indépendamment l'un de l'autre sur le rail de guidage de chariot (20), et
une table XY comprenant une structure porteuse (41) et un premier et un deuxième guide linéaire (42, 43), qui sont réalisés avec un décalage angulaire l'un par rapport à l'autre et qui présentent chacun un premier et un deuxième élément de guidage (142, 242, 143, 243), qui peuvent être déplacés l'un par rapport à l'autre le long d'une trajectoire linéaire,
les premiers éléments de guidage (142, 143) du premier et du deuxième guide linéaire (42, 43) étant raccordés à la structure porteuse (41),
le deuxième élément de guidage (242) du premier guide linéaire (42) étant raccordé au premier chariot (35) et le deuxième élément de guidage (243) du deuxième guide linéaire (43) étant raccordé au deuxième chariot (36) afin d'effectuer, dans le cas d'un déplacement en commun des deux chariots, un déplacement de la table XY le long de la trajectoire de déplacement dans la direction X, et dans le cas d'un déplacement relatif des deux chariots l'un par rapport à l'autre, un déplacement de la table XY transversalement à la trajectoire de déplacement dans la direction Y,
le premier et le deuxième guide linéaire (42, 43) étant réalisés parallèlement au plan de la trajectoire du rail de guidage de chariot (20), et les premiers éléments de guidage (142, 143) du premier et du deuxième guide linéaire (42, 43) étant raccordés à la structure porteuse (41) et/ou le deuxième élément de guidage (242) du premier guide linéaire (42) étant raccordé au premier chariot (35) et le deuxième élément de guidage (243) du deuxième guide linéaire (43) étant raccordé au deuxième chariot (36) de manière à pouvoir tourner dans le plan de la trajectoire du rail de guidage de chariot.

2. Système de transport linéaire comprenant
un rail de guidage de chariot (20) qui présente une section courbe (110),
un premier et un deuxième chariot (35, 36) qui sont disposés de manière déplaçable indépendamment l'un de l'autre sur le rail de guidage de chariot (20), et
une table XY comprenant une structure porteuse (41) et un premier et un deuxième guide linéaire (42, 43), qui sont réalisés avec un décalage angulaire l'un par rapport à l'autre et qui présentent chacun un premier et un deuxième élément de guidage (142, 242, 143, 243), qui peuvent être déplacés l'un par rapport à l'autre le long d'une trajectoire linéaire,
les premiers éléments de guidage (142, 143) du premier et du deuxième guide linéaire (42, 43) étant raccordés à la structure porteuse (41),
le deuxième élément de guidage (242) du premier guide linéaire (42) étant raccordé au premier chariot (35) et le deuxième élément de guidage (243) du deuxième guide linéaire (43) étant raccordé au deuxième chariot (36) afin d'effectuer, dans le cas d'un déplacement en commun des deux chariots, un déplacement de la table XY le long de la trajectoire de déplacement dans la direction X, et dans le cas d'un déplacement relatif des deux chariots l'un par rapport à l'autre, un déplacement de la table XY transversalement à la trajectoire de déplacement dans la direction Y,
le premier et le deuxième guide linéaire (42, 43) étant réalisés dans un plan d'orientation perpendiculairement au plan de la trajectoire du rail de guidage de chariot (20), et
les premiers éléments de guidage (142, 143) du premier et du deuxième guide linéaire (42, 43) étant raccordés à la structure porteuse (41) et/ou le deuxième élément de guidage (242) du premier guide linéaire (42) étant raccordé au premier chariot (35) et le deuxième élément de guidage (2 3) du deuxième guide linéaire (43) étant raccordé au deuxième chariot (36) de manière à pouvoir basculer dans le plan d'orientation.

3. Système de transport linéaire selon la revendication 1 ou 2, **caractérisé en ce que** les premiers éléments de guidage (142, 143) du premier et du deuxième guide linéaire (42, 43) sont chacun des rails de guidage et les deuxièmes éléments de guidage (242, 243) du premier et du deuxième guide linéaire sont chacun des éléments coulissants.

4. Système de transport linéaire selon l'une quelconque des revendications 1 à 3, **caractérisé en ce que** les premiers éléments de guidage (142, 143) du premier et du deuxième guide linéaire (42, 43) sont raccordés à la structure porteuse (41) et/ou le deuxième élément de guidage (242) du premier guide linéaire (42) est raccordé au premier chariot (35) et le deuxième élément de guidage (243) du deuxième guide linéaire (43) est raccordé au deuxième chariot (36) à chaque fois par le biais d'une articulation pivotante (44, 45, 48, 49).

5. Système de transport linéaire selon l'une quelconque des revendications 1 à 4, **caractérisé par** un dispositif de basculement qui est disposé entre les premiers éléments de guidage (142, 143) du premier et du deuxième guide linéaire (42, 43) et la structure porteuse (41) et/ou entre le deuxième élément de guidage (242) du premier guide linéaire et le premier chariot (35) et le deuxième élément de guidage (243) du deuxième guide linéaire (43) et le deuxième chariot (36) et qui est conçu de manière à pouvoir basculer perpendiculairement au plan de la trajectoire du rail de guidage de chariot (20).

6. Système de transport linéaire selon la revendication 5, **caractérisé en ce que** le dispositif de basculement présente au moins une articulation rabattable (50, 51) avec un élément de déclenchement (53), le système de transport linéaire comprenant un chariot supplémentaire (301) avec un élément de basculement (39) qui est conçu pour actionner l'articulation rabattable (50, 51) lors de l'engagement avec l'élément de déclenchement, afin de provoquer un mouvement de basculement de la structure porteuse.

7. Système de transport linéaire selon l'une quelconque des revendications 1 à 6, **caractérisé par** un troisième guide linéaire (46) qui est disposé entre le deuxième élément de guidage (242) du premier guide linéaire (42) et le premier chariot (35) et entre le deuxième élément de guidage (243) du deuxième guide linéaire (43) et le deuxième chariot (36) et qui est conçu de telle sorte que le premier et le deuxième chariot puissent être déplacés l'un par rapport à l'autre le long d'une trajectoire linéaire.

8. Système de transport linéaire selon la revendication 7, **caractérisé en ce que** le troisième guide linéaire (46) présente un rail de guidage (146) et un élément de glissement (246), le rail de guidage pouvant être raccordé au premier chariot (35) et l'élément de glissement pouvant être raccordé au deuxième chariot (36).

9. Système de transport linéaire selon l'une quelconque des revendications 1 à 8, **caractérisé en ce que** le rail de guidage de chariot (20) forme une trajectoire fermée.

10. Système de transport linéaire selon l'une quelconque des revendications 1 à 9, **caractérisé en ce que** le rail de guidage de chariot (20) est disposé sur un stator qui présente un agencement en série de bobines (13) pouvant être alimentées en courant individuellement, les chariots comprenant chacun au moins un aimant permanent (33) qui est conçu pour interagir avec le champ magnétique formé par l'agencement en série de bobines pouvant être alimentées en courant individuellement.
